# EUROPEAN PATENT SPECIFICATION

(11) **EP 0 809 683 B1**
(45) Date of publication and mention of the grant of the patent: **14.11.2001**
(21) Application number: 96907036.6
(22) Date of filing: 09.02.1996
(51) Int. Cl.: C10G 17/00

(54) **THERMAL DECOMPOSITION OF NAPHTHENIC ACIDS**
THERMISCHE ZERSETZUNG VON NAPHTHENSÄUREN
DECOMPOSITION THERMIQUE DES ACIDES NAPHTENIQUES

(30) Priority: 17.02.1995 US 390729; 12.12.1995 US 571049
(43) Date of publication of application: 03.12.1997
(73) Proprietor: ExxonMobil Research and Engineering Company, Annandale, New Jersey 08801 (US)
(72) Inventor: BLUM, Saul, C., Edison, NJ 08820 (US); OLMSTEAD, William, N., Murray Hill, NJ 07974 (US); BEARDEN, Roby, Jr., Baton Rouge, LA 70808 (US)
(74) Representative: Dew, Melvyn John
(86) International application number: US9601817
(87) International publication number: WO9625471

(56) References cited:
- US-A- 1 953 353
- US-A- 2 186 425
- US-A- 2 227 811
- US-A- 5 250 175

## Description

This invention relates to a thermal, non-catalytic treatment for decomposing naphthenic acids present in crude oils or crude oil fractions.

The presence of relatively high levels of petroleum acids, e.g., naphthenic acids, in crude oils or fractions thereof is a bane of petroleum refiners and more recently of producers, as well. Essentially, these acids, which are found to greater or lesser extent in virtually all crude oils, are corrosive, tend to cause equipment failures, lead to high maintenance costs, more frequent turnarounds than would otherwise be necessary, reduce product quality, and cause environment disposal problems.

A very significant amount of literature, both patents and publications, exists that deal with naphthenic acid removal by conversion or absorption. For example, many aqueous materials can be added to crudes or crude fractions to convert the naphthenic acids to some other material, e.g., salts, that can either be removed or are less corrosive. Other methods for naphthenic acid removal are also well known including absorption, on zeolites, for example. Additionally, one common practice for overcoming naphthenic acid problems is the use of expensive alloy materials in refinery or producer equipment that will encounter relatively high naphthenic acid concentrations. Another common practice involves blending off crudes with high total acid numbers (TAN) with crudes of lower TAN, the latter, however, being significantly more costly than the former.

US-A-1,953,353 discloses decomposing naphthenic acids present in topped crudes or distillates, at atmospheric pressure and at a temperature from 315° to 400°C (600°F to 750°F). CO₂ is the only gaseous naphthenic acid decomposition product recognised and referred to.

US-A-5,250,175 refers generally to the thermal treatment of waste streams from e.g. oil and gas industry and refinery production, and chemical manufacturing industry. It particularly refers to a staged thermal treatment of streams arising in oil field drilling. At each stage gaseous volatiles are carried away by a carrier gas such as nitrogen, carbon dioxide or steam. The carrier gas has as a major function the provision of an atmosphere preventing the combustion/oxidation of the gaseous volatiles.

Nevertheless, there remains a need for eliminating or at least substantially reducing petroleum acid concentration in crudes or fractions thereof, particularly crudes or fractions thereof where the total acid number (TAN) is above about 2 mg KOH/gm oil, as determined by ASTM method D-664.

In accordance with the present invention, there is provided a process for reducing the total total acid number (TAN) of a naphthenic acids-containing petroleum feed, being a whole crude or crude fraction; which process comprises the steps of: (a) thermally treating the feed, in the absence of any agent for removing naphthenic acids, in a treatment zone at a temperature of at least 205°C (400°F) for a period of time sufficient to substantially reduce the TAN and (b) continuously removing gaseous phase naphthenic acids decomposition-components, comprising water vapour, CO and CO₂, from the treatment zone during the thermal treating step by introducing a water vapor-free, inert sweep gas.

By means of the process of the invention, petroleum acids may be substantially reduced, or at the least, reduced to the level where the feeds may thereafter be treated in plain carbon steel vessels.

In the context of this invention, thermal treatment, in addition to its normal meaning also means the absence of any catalyst for promoting the conversion of naphthenic acids, the absence of any material added to react or complex with naphthenic acids, and the absence of absorbents for naphthenic acids, i.e., the absence of any material used for the purpose of removing naphthenic acids.

The thermal treatment amounts to heating the feed to a temperature of at least 205°C (400°F), preferably at least 315°C (600°F) for a period of time sufficient to reduce substantially TAN of the feed while constantly sweeping away inhibitors indigenous or formed during the decomposition. Inhibitors are primarily water vapor, magnified by the presence of CO₂ and/or CO. The thermal treatment process is, of course, a time-temperature dependent relationship once the threshold temperature level is attained. Thus, higher temperatures are also useful with a corresponding decrease in residence time at those higher temperatures. However, because of the nature of the feeds, premature cracking of the bulk hydrocarbons is to be avoided or minimized, e.g., based on the feed, less than about 0.5 wt% gaseous hydrocarbon products, and preferably, based on the feed, less than 0.2 wt% of gaseous hydrocarbon products is produced. The gases that are produced are primarily water vapor, CO₂ and CO by virtue of the decomposition of the naphthenic acids. Other gases that may be produced by the very low level of cracking include light hydrocarbon gases, e.g., C₁-C₄ alkyls or iso-alkyls, and hydrogen in small amounts.

The process of this invention preferably reduces TAN to levels of less than about 1.5 mg KOH/gm oil, more preferably less than about 1 mg KOH/gm oil, still more preferably to less than about 0.5 mg KOH/gm oil, as measured by ASTM D-664.

### BRIEF DESCRIPTION OF THE FIGURE

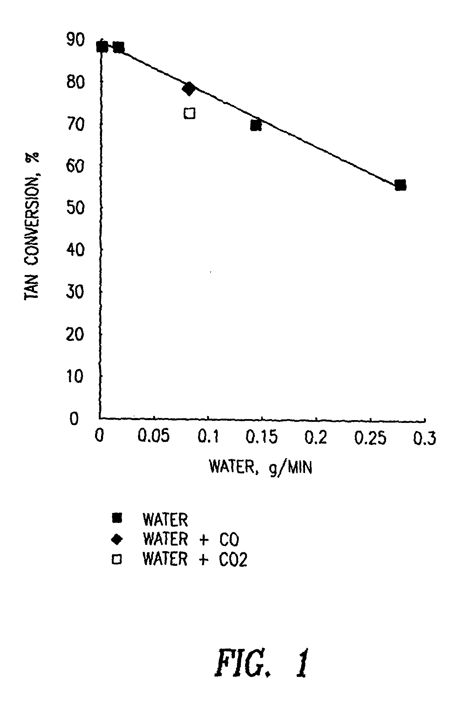

Figure 1 shows TAN reduction versus water for Example 4.

### DESCRIPTION OF PREFERRED EMBODIMENTS

Feeds that may be effectively treated by this thermal treatment process include feeds containing naphthenic acids such as whole crudes or crude fractions. Crude fractions that may be treated are topped crudes (since few naphthenic acids are present in 205°C- (400°F -)naphtha), atmospheric residua, and vacuum gas oils, e.g., 343 to 566°C (650-1050°F). Preferred feeds include whole and topped crudes and vacuum gas oils, particularly whole and topped crudes.

The feed may be treated at super-atmospheric, atmospheric or sub-atmospheric pressure, e.g., 0.101 to 101.3 bar (0.1 to 100 atmospheres), preferably less than about 15.20 bar (15 atmospheres), more preferably 1.013 to 10.13 bar (1-10 atmospheres), and preferably in an inert atmosphere, e.g., nitrogen or other non-oxidizing gases. Because thermal treatment leads to acid decomposition, provisions for venting the gaseous decomposition products, i.e., H₂O vapor, CO₂ and CO, as well as the minimal cracking products, is appropriate. It is especially necessary to continuously sweep away water vapor produced in the acid decomposition or indigenous with the feed to minimize inhibition of the acid decomposition process. Any light ends or light cracked hydrocarbon products can be recovered by condensation, and, if desirable, recombined with the treated feed. In practice, soaking drums with venting facilities may be used to carry out the thermal treatment process. This sweep gas may be natural gas or other light hydrocarbon gases as may be generally available at refineries or production facilities. Purge rates of sweep gas would be in the range of 0.18 to 356.0 std m³/m³ (1-2000 standard cubic feet per barrel of feed (SCF/Bbl). Preferably, the gaseous products would be removed from the reaction zone such that CO + CO₂ partial pressure is below 3.45 kPa (0.5 psia) and the H₂O, partial pressure is below about 1.38 kPa (0.2 psia).

While treatments are time-temperature dependent, temperatures are preferably in the range of 315 to 482°C (600-900°F), more preferably 371 to 427°C (700-800°F). Treatment (residence time at temperature) times may vary widely and are inversely related to temperature, e.g., 30 seconds to about 10 hours, preferably 1-90 minutes, more preferably 30-90 minutes. Of course, at any given temperature longer treatment times will generally result in lower TAN values, while taking care not to exceed the cracking levels previously mentioned.

As mentioned, soaking drums may be employed to carry out the process either on a batch or continuous basis. Engineers skilled in the art will readily envisage tubular reactors to effect the process.

The following examples further illustrate the invention, and are not meant to be limiting in any way.

### EXAMPLE 1

Experiments conducted in an open reactor (all, except as otherwise noted) included distillation equipment similar to the described in ASTM D-2892 or ASTM D-5236. About 300 grams of a sample of 343°C+ (650°F+) portion of crude was placed in a distillation flask. (Whole crude, while readily usable, was not used in order to prevent physical losses of the 343°C- (650°F -) portion of the sample). The sample was rapidly heated to the desired temperature and held at that temperature for up to six hours under an inert atmosphere, e.g. nitrogen. Agitation was effected either by bubbling nitrogen through the sample, and preferably by stirring with a magnetic stirrer bar. Aliquots were withdrawn periodically for TAN measurements.

In a series of experiments, a 343°C (650°F+) fraction of an African crude (Bolobo) was exposed to six hour heat soaks within a temperature range from 204 to 343°C (400°F to 650°F) interspersed with overnight cooling to room temperature for three consecutive days. These experiments were carried out at atmospheric pressure under a nitrogen atmosphere. The heat soak was sequential: first hour at 204°C (400°F), second hour at 232°C (450°F), third hour at 260°C (500°F), fourth hour at 288°C (550°F), fifth hour at 315°C (600°F), sixth hour at 343°C (650°F). The sample was cooled to room temperature and allowed to sit overnight before aliquots were taken. Naphthenic acid content was monitored by TAN initially and after each day. The results are shown in Table 1 below.

**TABLE 1**

| Test Day | TAN | (mg KOH/gm oil) |
|---|---|---|
| 0 (initial TAN) | 3.02 | (1) |
| 1 | 2.22 | 2.22 (2) |
| 2 | 1.80, | 1.77 (2) |
| 3 | 1.17 | 1.25 (2) |

| | | |
|---|---|---|
| (1) from crude assay | | |
| (2) two aliquots taken after each day and independently tested | | |

The TAN decreased almost linearly over the course of these experiments.

### EXAMPLE 2

In a series of experiments, thermally treated naphthenic acid decomposition was conducted in open and closed reactors. In the open reactor, produced gas could slowly escape while in the closed reactor, product gases were retained. TAN reduction and gas make were determined and results are shown in Table 2.

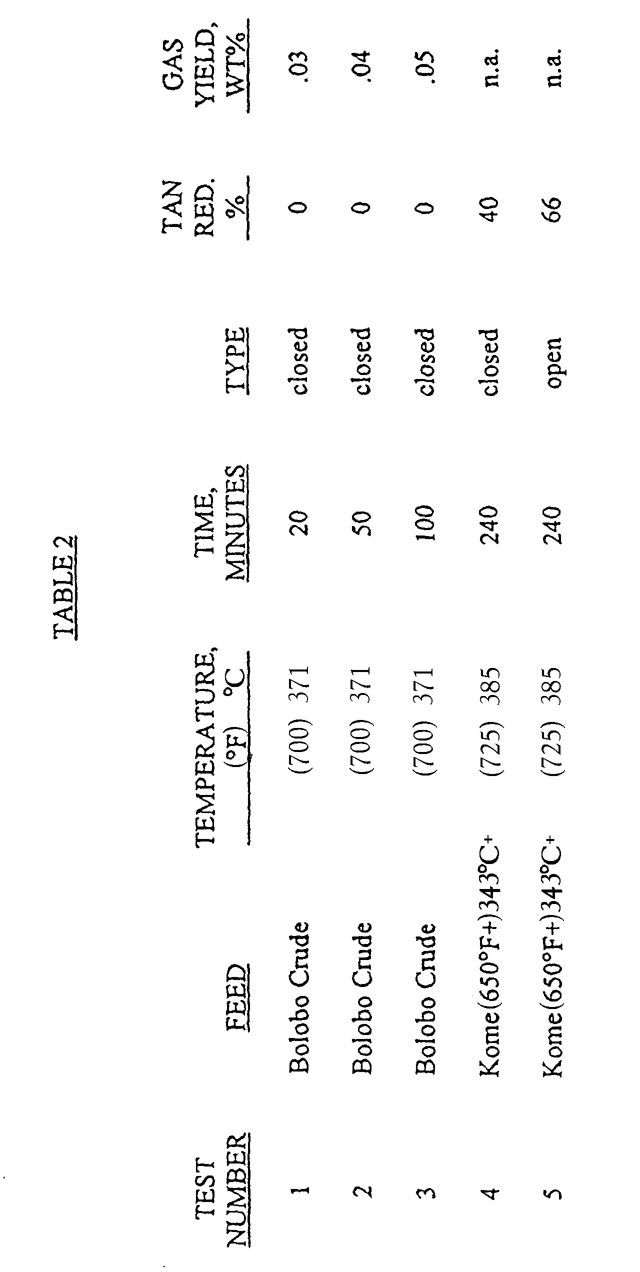

The closed reactor consisted of tubing bombs (25 g oil in 65 cc reactor volume), or mini bombs (5 g oil in 12 cc reactor volume).

The results showed that in closed systems no TAN reduction was achieved, suggesting that autogenous pressure increases prevented acid decomposition. A direct comparison between an open and closed system, in experiments 4 and 5, showed a better than 50% increase in TAN reduction for the open system over the closed system.

### EXAMPLE 3

In another series of experiments thermally treated naphthenic acid decomposition was conducted in an autoclave to demonstrate the beneficial effect of sweeping gaseous products from the reaction zone. In experiment Test 1, produced gases were continuously swept away with helium at a rate of 227.0 std m³/m³ (1275 SCF/Bbl) while in experiment Test 2, product gases were retained such that the maximum pressure rose to 791 kPa (100 psig). TAN was determined and results are shown in Table 3.

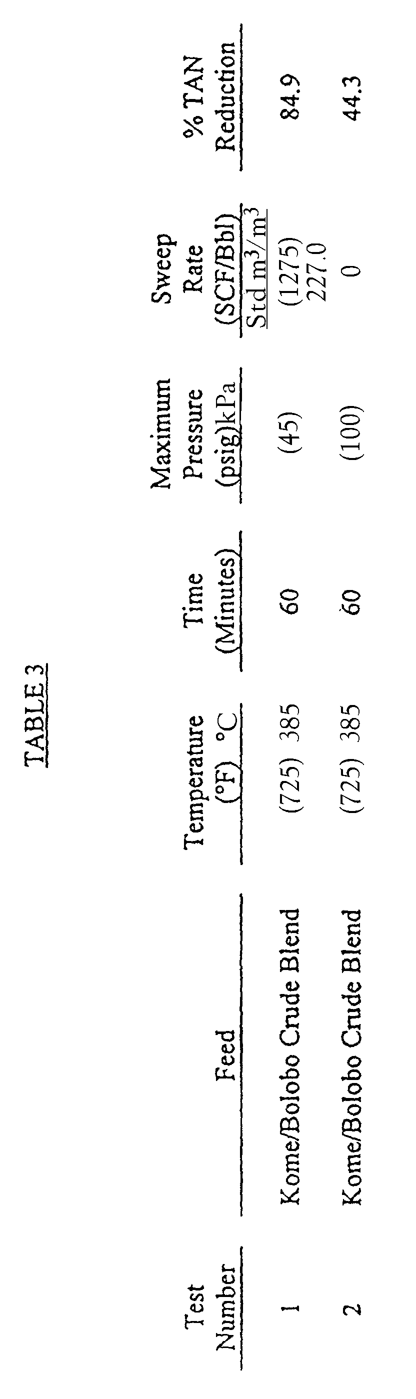

The results confirm that sweeping the gases from the reaction zone result in significantly improved TAN reduction, 84.9% relative to an initial TAN of 5.3. In contrast, only 44.3% TAN reduction was achieved with no gas sweep.

### EXAMPLE 4

In another series of autoclave experiments, the effect of inhibition by water vapor, in the presence or absence of CO₂ and/or CO was studied with respect to TAN reduction by thermal treatment. The results are shown in Table 4. In each test, the estimated water partial pressure (H₂O, psia), resulting from TAN conversion was less than 0.2 (as distinguished from the added water line).

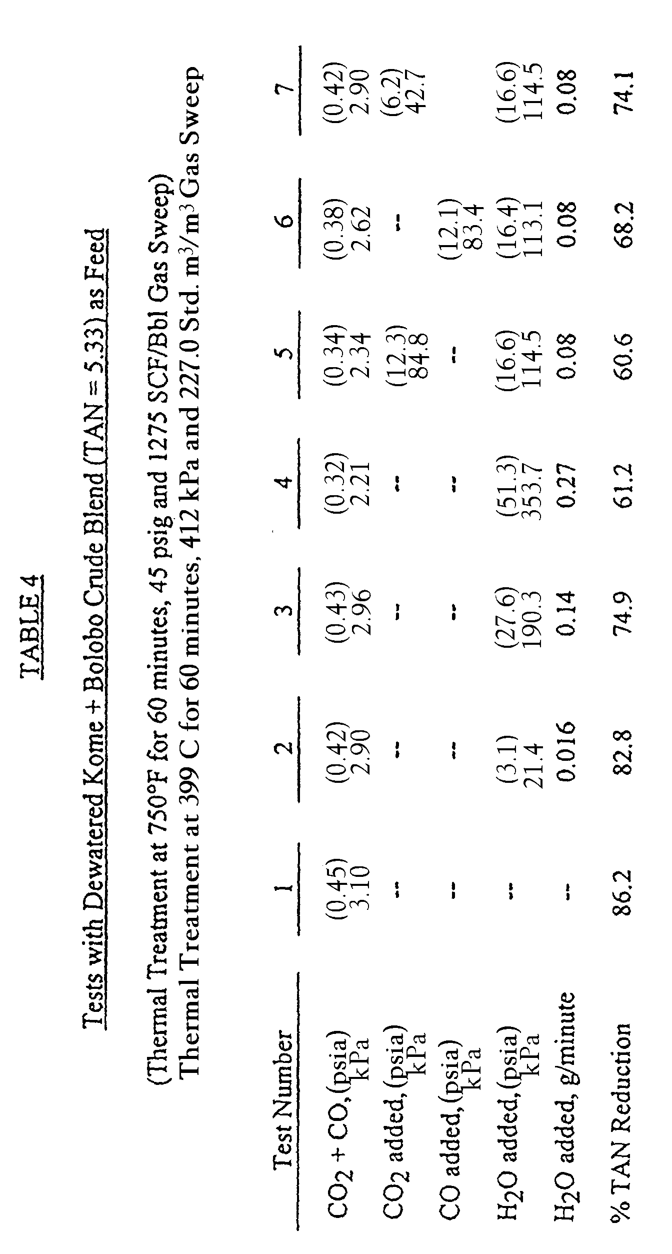

In experiment Test 1, with no water vapor added and carbon oxides only resulting from naphthenic acid decomposition, the highest TAN reduction of 86.2% was achieved for this set of tests. In Test 2, Test 3 and Test 4, water vapor added to the sweep gas in increasing amounts resulted in progressively less TAN reduction than in the base case. In Test 5, Test 6 and Test 7, similar amounts of water were added along with CO₂, CO and CO₂ + CO, respectively. All three showed lower % TAN reduction levels compared to the referenced Test 2.

These effects may be readily seen in Figure 1, a plot of % TAN Reduction vs. H₂O added in g/min., using results from Table 4.

## Claims

1. A process for reducing the total acid number (TAN) of a naphthenic acids-containing petroleum feed, being a whole crude or crude fraction; which process comprises the steps of: (a) thermally treating the feed, in the absence of any agent for removing naphthenic acids, in a treatment zone at a temperature of at least 205°C (400°F) for a period of time sufficient to substantially reduce the TAN and (b) continuously removing gaseous phase naphthenic acids decomposition-components, comprising water vapour, CO and CO₂, from the treatment zone during the thermal treating step by introducing a water vapor-free, inert sweep gas.

2. The process of claim 1, wherein said gaseous reaction products are removed such that CO + CO₂ partial pressure is less than 3.45 kPa (0.5 psia) and water partial pressure is less than 1.38 kPa (0.2 psia).

3. The process of any preceding claim, wherein the said sweep gas is natural gas.

4. The process of any preceding claim, wherein said sweep gas is employed at a rate of 0.18 to 356.0 std m³/m³ of said petroleum feed (1 to 2000 std ft³ per barrel of feed).

5. The process of any preceding claim, wherein the treatment temperature is at least 315°C (600°F).

6. The process of claim 5, wherein the treatment temperature is in the range 315 to 482°C (600-900°F).

7. The process of claim 5 or claim 6, wherein the thermal treatment time is from 1 to 90 minutes.

8. The process of any preceding claim, wherein the thermal treatment is conducted at a pressure in the range 1.01 to 10.13 bar (1 to 10 atm).

9. The process of any preceding claim, wherein the feed is selected from whole crudes, dewatered crudes, topped crudes, atmospheric residua and 343 to 566°C (650 to 1050°F) vacuum gas oil.

10. The process of any preceding claim, wherein the feed has an initial TAN in excess of 2 mg KOH/g feed, as measured by ASTM method D-664.

## Patentansprüche

1. Verfahren zur Verminderung der Gesamtsäurezahl (TAN) von Naphthensäuren enthaltendem Erdöleinsatzmaterial, das ein vollständiges Rohöl oder eine Rohölfraktion ist, bei dem in Stufen (a) das Einsatzmaterial in Abwesenheit von jeglichem Mittel zur Entfernung von Naphthensäuren in einer Behandlungszone bei einer Temperatur von mindestens 205°C (400°F) für einen ausreichenden Zeitraum wärmebehandelt wird, um die TAN wesentlich zu vermindern, und (b) während der Wärmebehandlungsstufe in der Gasphase vorliegende Zersetzungskomponenten von Naphthensäuren, die Wasserdampf, CO und CO₂ umfassen, kontinuierlich aus der Behandlungszone entfernt werden, indem ein wasserdampffreies inertes Spülgas eingebracht wird.

2. Verfahren nach Anspruch 1, bei dem die gasförmigen Reaktionsprodukte entfernt werden, so dass der Partialdruck von CO+CO₂ weniger als 3,45 kPa (0,5 psia) beträgt und der Partialdruck von Wasser weniger als 1,38 kPa (0,2 psia) beträgt.

3. Verfahren nach einem der vorhergehenden Ansprüche, bei dem das Spülgas Erdgas ist.

4. Verfahren nach einem der vorhergehenden Ansprüche, bei dem das Spülgas mit einer Rate von 0,18 bis 356,0 Std m³/m³ des Erdöleinsatzmaterials (1 bis 2000 Std ft³ pro Barrel Einsatzmaterial) verwendet wird.

5. Verfahren nach einem der vorhergehenden Ansprüche, bei dem die Behandlungstemperatur mindestens 315°C (600°F) beträgt.

6. Verfahren nach Anspruch 5, bei dem die Behandlungstemperatur im Bereich von 315 bis 482°C (600 bis 900°F) liegt.

7. Verfahren nach Anspruch 5 oder Anspruch 6, bei dem die Wärmebehandlungsdauer 1 bis 90 Minuten beträgt.

8. Verfahren nach einem der vorhergehenden Ansprüche, bei dem die Wärmebehandlung bei einem Druck im Bereich von 1,01 bis 10,13 bar (1 bis 10 atm) durchgeführt wird.

9. Verfahren nach einem der vorhergehenden Ansprüche, bei dem das Einsatzmaterial ausgewählt ist aus vollständigen Rohölen, entwässerten Rohölen, getoppten Rohölen, atmosphärischen Rückständen und 343 bis 566°C (650 bis 1050°F) Vakuumgasöl.

10. Verfahren nach einem der vorhergehenden Ansprüche, bei dem das Einsatzmaterial eine Anfangs-TAN über 2 mg KOH/g Einsatzmaterial hat, gemessen nach ASTM Verfahren D-664.

## Revendications

1. Procédé de réduction de l'indice d'acide total (TAN) d'une charge pétrolière contenant des acides naphténiques, qui est un brut entier ou une fraction de brut, ledit procédé comprenant les étapes (a) de traitement thermique de la charge, en l'absence de tout agent d'élimination des acides naphténiques, dans une zone de traitement à une température d'au moins 205°C (400°F) pendant une période de temps suffisante pour réduire sensiblement le TAN, et (b) d'élimination en continu de composants de décomposition d'acides naphténiques en phase gazeuse, comprenant de la vapeur d'eau, du CO et du CO₂, de la zone de traitement pendant l'étape de traitement thermique en introduisant un gaz de balayage inerte dépourvu de vapeur d'eau.

2. Procédé selon la revendication 1, dans lequel lesdits produits réactionnels gazeux sont éliminés de sorte que la pression partielle de CO + CO₂ soit inférieure à 3,45 kPa (0,5 psia) et que la pression partielle de l'eau soit inférieure à 1,38 kPa (0,2 psia).

3. Procédé selon l'une quelconque des revendications précédentes, dans lequel ledit gaz de balayage est du gaz naturel.

4. Procédé selon l'une quelconque des revendications précédentes, dans lequel ledit gaz de balayage est utilisé à un débit de 0,18 à 356,0 m³ normaux/m³ de ladite charge pétrolière (1 à 2000 pied³ std par baril de charge).

5. Procédé selon l'une quelconque des revendications précédentes, dans lequel la température de traitement est d'au moins 315°C (600°F).

6. Procédé selon la revendication 5, dans lequel la températurè de traitement se situe dans la plage de 315 à 482°C (600 à 900°F).

7. Procédé selon la revendication 5 ou la revendication 6, dans lequel le temps de traitement thermique est de 1 à 90 minutes.

8. Procédé selon l'une quelconque des revendications précédentes, dans lequel le traitement thermique s'effectue à une pression dans la plage de 1,01 à 10,13 bars (1 à 10 atm.).

9. Procédé selon l'une quelconque des revendications précédentes, dans lequel la charge est choisie parmi les bruts entiers, les bruts séparés de l'eau, les bruts étêtés, les résidus atmosphériques et le gasoil sous vide de 343-566°C (650-1050°F).

10. Procédé selon l'une quelconque des revendications précédentes, dans lequel la charge a un TAN initial de plus de 2 mg de KOH/g de charge, mesuré par la méthode ASTM D-664.
